Europäisches Patentamt

European Patent Office

Office européen des brevets

(11) Publication number: **0 418 455 A2**

(12) **EUROPEAN PATENT APPLICATION**

(21) Application number: 90103867.9

(51) Int. Cl.⁵: **C08G 75/02**

(22) Date of filing: 28.02.90

(30) Priority: 20.09.89 US 409846

(43) Date of publication of application:
27.03.91 Bulletin 91/13

(84) Designated Contracting States:
AT BE CH DE DK ES FR GB GR IT LI LU NL SE

(71) Applicant: PHILLIPS PETROLEUM COMPANY
5th and Keeler
Bartlesville Oklahoma 74004(US)

(72) Inventor: Hagenson, Randy Lee
2208 SE Kristen Lane
Bartlesville, OK 74006(US)
Inventor: Scoggins, Lacey Eugene
1310 Lariat Drive
Bartlesville, OK 74006(US)
Inventor: Soules, David Andrew
1207 May Lane
Bartlesville, Ok 74006(US)
Inventor: Stone, Mark Lee
305 Eastview Drive

Idaho Falls, ID 83401(US)
Inventor: Register, David Francis
737 Brookhollow Lane
Bartlesville, OK 74006(US)
Inventor: Geibel, Jon Frederick
2600 Mountain Road
Bartlesville, OK 74003(US)
Inventor: Yu, Michael Chen-Cheu
208 NE Spruce Avenue
Bartlesville, OK 74006(US)
Inventor: Johnson, Timothy Walter
1520, Smysor Drive
Bartlesville, OK 74006(US)

(74) Representative: Dost, Wolfgang,
Dr.rer.nat.,Dipl.-Chem. et al
Patent- & Rechtsanwälte Bardehle .
Pagenberg . Dost . Altenburg . Frohwitter .
Geissler & Partner Galileiplatz 1 Postfach 86
06 20
W-8000 München 86(DE)

(54) Improved poly(arylene sulfide) and method of making, and article of manufacture including, the same.

(57) An improved composite includes an improved polymer, specifically an improved poly(phenylene sulfide). The improved polymer is produced by an improved method including a polymerization phase, a recovery phase, a washing phase, and an optional air-curing phase. In the polymerization phase a low temperature cycle and a high temperature cycle are used. In a preferred recovery phase, solidified polymer is quenched with N-methyl-2-pyrrolidone. In the washing phase, the recovered solidified polymer is washed with a hot acidic solution and then hot water. In a preferred embodiment, the method produces substantially linear poly(phenylene sulfide) having a melt flow within the range of about 50 to about 200 grams per 10 minutes and an ash content of not greater than about 0.1 weight percent and a melt crystallization temperature of not less than about 347° F (175° C).

EP 0 418 455 A2

EP 0 418 455 A2

# IMPROVED POLY(ARYLENE SULFIDE) AND METHOD OF MAKING, AND ARTICLE OF MANUFACTURE INCLUDING, THE SAME

## Background of the Invention

This Application is a continuation-in-part of application Serial No. 07/315,422, filed February 24, 1989.

This invention relates generally to an improved thermoplastic polymer, namely, poly(arylene sulfide) and a method of making the polymer and an article of manufacture which includes the polymer. More particularly, but not by way of limitation, the present invention relates to the production of clean, high molecular weight, linear poly(phenylene sulfide), to the polymer itself, and to articles of manufacture made from the polymer.

A thermoplastic material is a polymer that softens when sufficiently heated and returns to its original condition when sufficiently cooled. Thermoplastic polymers can have high strength, light weight, and low thermal conductivity, and they can be non-rusting, corrosion-resistant, and non-conductive. Such polymers can have a wide range of applications when made into finished products. The oil and gas industry and the aircraft industry are two examples where such polymers have found useful applications. Such polymers can have more conventional uses in products such as frames, supports, gratings, ladders, walkways and guardrails to name only a few.

One type of thermoplastic material is poly(arylene sulfide) (PAS), the generic name for a class of polymers. A species of PAS is poly(phenylene sulfide) (PPS). Characteristics or properties of a PAS polymer can be affected by the method by which it is produced. The resultant characteristics or properties of the PAS polymer in turn can affect the characteristics or properties of an article of manufacture made from the polymer.

One type of such an article is a composite made in a pultrusion process wherein one or more fiber strands are combined with a PAS polymer matrix. The suitability of a composite for a particular application can be judged, at least in part, by the following: fiber/matrix adhesion, transverse composite properties, microcracking, and composite interlaminar properties. These properties are a function, at least in part, of the nature of the polymer. Thus, to provide a composite having improvements in these properties, there is the need for an improved polymer used in the composite and there is the need for an improved method to enable the improved polymer to be made.

## Summary of the Invention

The present invention meets the foregoing needs by providing a method of producing improved PAS, by providing the improved polymer itself, and by providing articles of manufacture which include the improved polymer.

The improved polymer produced by the method of the present invention has a number of characteristics which are useful in producing an improved article of manufacture of the present invention. These characteristics include: high molecular weight, linear molecular structure ("linear" and "substantially linear" as used herein are synonymous in that in actual practice some branching may occur in the production of a "linear" polymer), high purity (i.e., low ash content, which makes the polymer "clean" as used herein), and, for those poly(arylene sulfide)s which are semi-crystalline or crystalline, a high melt crystallization temperature. The term "clean is used herein to refer to a polymer having an ash content of less than about 0.3 weight percent. The crystalline and semi-crystalline polymer has an enhanced nucleation density yielding a much denser spherulitic grain structure resulting in faster crystallization during processing. In a preferred embodiment specifically pertaining to PPS, the PPS polymer has a flow rate, or melt flow, within the range of about 50 to about 200 grams per 10 minutes while maintaining good toughness, strength and elongation properties.

The improved polymer is used as the matrix to produce a long fiber reinforced composite material as an article of manufacture of the present invention. As a result of the improved polymer, the composite has improved fiber/matrix adhesion, transverse composite properties, and composite interlaminar properties. The improved polymer mitigates microcracking in the composite, and, at least for the crystalline and semi-crystalline poly(arylene sulfide)s, the improved polymer widens the range of acceptable processing parameters during which the composite is made, thereby providing consistent composite properties over a

2

wide range of processing conditions.

In one embodiment, the present invention provides a method of producing clean, high molecular weight, linear poly(arylene sulfide), comprising the steps of: (a) creating high molecular weight linear poly(arylene sulfide) by heating a reaction mixture including linear poly(arylene sulfide) during two sequential heating cycles; (b) recovering from the reaction mixture high molecular weight linear poly(arylene sulfide) in solidified form; and (c) washing the recovered solidified high molecular weight linear poly(arylene sulfide) to remove ash therefrom.

Another embodiment of the present invention provides a method of producing clean, high molecular weight, linear poly(arylene sulfide), comprising the steps of: (a) sequentially solidifying high molecular weight then low molecular weight linear poly(arylene sulfide) in a reaction mixture including high molecular weight and low molecular weight linear poly(arylene sulfide) by controlled cooling; (b) redissolving low molecular weight linear poly(arylene sulfide); (c) filtering solidified high molecular weight linear poly(arylene sulfide) from the reaction mixture; and (d) washing the filtered solidified high molecular weight linear poly-(arylene sulfide) to remove ash therefrom.

Another embodiment of the present invention provides a method of producing clean, high molecular weight, linear poly(arylene sulfide), comprising the steps of: (a) recovering, from a reaction mixture including high molecular weight linear poly(arylene sulfide), high molecular weight linear poly(arylene sulfide) in solidified form; and (b) washing the recovered solidified high molecular weight linear poly(arylene sulfide) to remove ash therefrom, including: washing the recovered solidified high molecular weight linear poly(arylene sulfide) with an acidic solution, preferably heated; and washing the recovered solidified high molecular weight linear poly(arylene sulfide) with hot water.

The present invention also provides a method of producing poly(phenylene sulfide), comprising the steps of: creating a solution by reacting an approximately 50% by weight NaOH aqueous solution with an approximately 60% by weight NaSH aqueous solution and by adding and reacting therewith N-methyl-2-pyrrolidone, sodium acetate and dichlorobenzene to produce a polymerized reaction mixture including poly-(phenylene sulfide); and heating the reaction mixture, recovering solidified poly(phenylene sulfide) from the reaction mixture and washing the recovered solidified poly(phenylene sulfide) so that the washed recovered solidified poly(phenylene sulfide) has a melt flow within the range of about 5 to about 800, or more generally about 50 to about 200 grams, per 10 minutes and an ash content of not greater than about 0.1 weight percent and a melt crystallization temperature of not less than about $347^\circ$ F ($175^\circ$ C), more preferably not less than about $428^\circ$ F ($220^\circ$ C).

The present invention also provides a composition of matter made in accordance with the methods of the present invention. In a preferred embodiment, the composition of matter comprises substantially linear poly(phenylene sulfide) having a melt flow within the range of about 50 to about 200 grams per 10 minutes and an ash content of not greater than about 0.1 weight percent and a melt crystallization temperature of not less than about $347^\circ$ F ($175^\circ$ C).

The present invention also provides an article of manufacture, comprising a thermoplastic composite body including a fiber strand in a clean, high molecular weight, linear poly(arylene sulfide) matrix.

In accordance with one embodiment of the present invention a carbon fiber reinforced composite comprising unidirectionally aligned carbon fibers in a poly(arylene sulfide) matrix is produced by the pultrusion of carbon fiber strands which are impregnated with a PAS resin which has been subjected to an ash removing step which results in an improvement in the transverse tensile of said composite. Any ash removal step could be employed which is capable of reducing the ash content of the PAS resin enough to improve the transverse tensile strength of the resulting composite.

Therefore, from the foregoing, it is a general object of the present invention to provide a novel and improved method of producing improved poly(arylene sulfide) in general and poly(phenylene sulfide) in particular. It is also a general object of the present invention to provide the improved polymer itself and an article of manufacture, particularly a composite, which includes the improved polymer. Other and further objects, features and advantages of the present invention will be readily apparent to those skilled in the art from the following description of the preferred embodiments.

Detailed Description of Preferred Embodiments

The method of the present invention will be described first, followed by a description of the resultant polymer and an article of manufacture made from the polymer.

### Method

The method of the present invention proceeds through a polymerization phase, a recovery phase and a washing phase. Thereafter, an optional air curing procedure of known type can be performed. This method as more specifically described hereinbelow is applicable broadly to the production of clean (i.e., reduced ash), high molecular weight, linear (i.e., substantially so) poly(arylene sulfide) (PAS). As will be described specifically herein, one or more preferred embodiments of the present method produce improved poly-(phenylene sulfide) (PPS), a species of PAS; however, it is to be noted that specific materials, compositions, values, ranges, etc., stated herein do not limit the broader aspects of the present invention.

### Polymerization

Polymerization in a preferred embodiment of the present invention includes creating high molecular weight, linear PAS by heating a reaction mixture including linear PAS during two sequential heating cycles (referred to as a long-cycle polymerization). For example, a dehydrated polymerizable sulfur source is produced (e.g., a NaOH aqueous solution is reacted with a NaSH aqueous solution to produce an aqueous sodium sulfide solution; a known molar excess quantity of NMp is added to the aqueous sodium sulfide solution and the resulting solution is dehydrated in a known manner). To the polymerizable sulfur source, a suitable modifier or catalyst is added. Arylene sulfide monomers and one or more comonomers, if used, are added. The resultant reaction mixture is reacted to produce a product containing the polymer PAS in liquid form. The reacting includes the two sequential heating cycles by which the molecular weight of the PAS is increased. In a preferred embodiment the first of the two heating cycles is at a lower temperature, and the second is at a higher temperature. The high temperature cycle is performed after the low temperature cycle.

In a preferred embodiment the reaction mixture which includes linear PAS specifically includes PPS, sodium chloride, water and N-methyl-2-pyrrolidone (NMP). This reaction mixture can be made in accordance with the teachings of U.S. Patent No. 3,919,177 to Campbell which is incorporated herein by reference. By way of example, the following steps are performed to produce a reaction mixture which is treated by the two-cycle heating to produce high molecular weight linear PPS. In the following example the feedstocks are of commercially pure quality known in the art.

An approximately 50% by weight NaOH aqueous solution is reacted with approximately 60% by weight NaSH aqueous solution to produce an aqueous sodium sulfide solution (44-46% $Na_2S$ + $H_2O$). A quantity of NMP is added to the aqueous sodium sulfide solution and the resulting solution is dehydrated in a known manner to produce the following solution:
$$(Na_2S \cdot NMP \cdot H_2O) + 2NMP$$

To this solution, a suitable modifier or phase transfer catalyst is added. In the preferred embodiment about 0.3 mole of sodium acetate (NaOAc) per mole $Na_2S$ is added to produce a reaction mixture to which a suitable amount of dichlorobenzene (DCB) (preferably p-DCB) is added. The resultant reaction mixture is polymerized by two sequential heating cycles to produce a reaction mixture containing the polymer PPS in liquid form as follows:
$$PPS + 2NaCl + H_2O + 3NMP$$

It is believed that it is the use of two sequential heating cycles that produces the apparent increases in the linear molecular weight of the PPS produced from the aforementioned polymerization.

In the preferred embodiment the first of the two heating cycles is at a lower temperature, and the second cycle is at a higher temperature. The second, higher temperature cycle is performed immediately after completion of the lower temperature cycle. During the lower temperature cycle, the reaction mixture is heated to a temperature within the range from about 400°F (204.4°C) to about 460°F (237.8°C) for a time period within the range from about 1 hour to about 6 hours. More preferably, this heating is at a temperature within the range from about 400°F (204.4°C) to about 440°F (226.7°C) for a time period within the range from about 3 hours to about 4 hours, and even more preferably the heating occurs at about 440°F (226.7°C) for about 4 hours. In a preferred embodiment the higher temperature cycle is performed so that the reaction mixture is heated to a temperature within the range from about 500°F (260°C) to about 520°F (271.1°C) for a time period within the range from about 1 hour to about 4 hours. More preferably, the heating during this cycle is performed at a temperature of about 510°F (265.6°C) for about 3 hours. After the performance of these two heating cycles, the reaction mixture contains liquid high molecular weight, linear PPS dispersed in NMP.

4

Recovery

Having produced high molecular weight linear PAS (specifically PPS in the foregoing example), it is next desirable to recover from the reaction mixture the high molecular weight, linear PAS in solidifed form for ease of removing the by-product salt. Also, it is the solidified form of PAS which is typically used in producing articles of manufacture such as fiber reinforced composites. The recovery in the present invention can be performed by any suitable technique which does not degrade the polymer, but three techniques are preferred.

One preferred method, applicable to crystalline PAS, includes flash recovering high molecular weight linear PAS. The preferred flash recovery is referred to as non-vent flash recovery. It is commenced after the high temperature cycle of the polymerization without venting (i.e., reducing) the pressure in the reaction vessel where the polymerization was performed. The temperature is increased above the temperature of the higher temperature cycle to start the non-vent flash recovery, and then the reaction mixture is flashed into a vessel at lower temperature and pressure (such as a ribbon blender at 460°F (237.8°C) and 0.02 psig which is purged with nitrogen). As a result, polymer in solidified form is obtained.

Another preferred recovery technique is the NMP quench recovery. This broadly includes: (a) sequentially solidifying high molecular weight then low molecular weight linear PAS in a reaction mixture including high molecular weight and low molecular weight linear PAS by controlled cooling; (b) redissolving low molecular weight linear PAS; and (c) filtering solidified high molecular weight linear PAS from the reaction mixture.

With regards to the previously described particular polymerization example wherein liquid high molecular weight, linear PPS was produced, the reaction mixture from the polymerization after being polymerized at a temperature of about 510°F (265.6°C) is first cooled at about 3°F per minute to about 470°F (243.3°C) from which it is then cooled at about 1°F per minute to about 400°F (204.4°C). At approximately 425°F (218.3°C), the high molecular weight, linear PPS solidifies into a granular form as known in the art. Further cooling is continued to reduce pressure within the pressurized vessel in which the foregoing processing is done as known in the art. At about 250°F (121.1°C), low molecular weight species of PPS, referred to as oligomers, solidify and the remaining liquid tends to become very viscous. To lower the viscosity for facilitating filtering, an appropriate polar organic compound such as NMP is added in large quantities, such as about 3 to about 5 moles per mole of sulfur present. Alternatively, water, in the same amount, can be used (this is the third technique, and is referred to as water quench). NMP is the currently preferred polar organic compound because it also redissolves solidified oligomers so that preferably solidified high molecular weight, linear PPS can be separated from the remaining constituents of the solid-in-liquid mixture by screening, centrifuging or filtration in a known manner (e.g., by shaker screen). This separates the PPS particles from the liquid filtrate which contains NMP, water, salt, oligomers and sodium acetate. Because the PPS particles are porous, they retain some of the filtrate. If this is to be removed, the PPS particles are next processed through the washing phase of the present invention.

Washing

Although the washing phase of the present invention removes filtrate from the solidified polymer in general, the washing phase of the preferred embodiments of the present invention is intended primarily to remove ash which includes ions from the salt (e.g., Na+ ions).

With reference to the foregoing example pertaining to PPS, the preferred embodiment washing phase of the present invention includes two conventional cold water washes wherein the solid PPS is washed with deionized cold water having a pH in the range from about 6.5 to about 7.0, filtered, again washed with deionized cold water of the same pH and thereafter filtered. To these steps, the preferred embodiment of the present invention adds two hot washes.

After the cold water washing, the recovered solidifed high molecular weight linear PPS is washed with an acidic solution, filtered, then washed with hot water, and again filtered. During the acidic solution washing, the PPS is washed with deionized water to which a substance has been added to make the solution acidic. In general, the acidic solution needs to have a pH and acid content sufficient to extract the salt or ash ions from the polymer. In a preferred embodiment, the solution has a pH of about 5.5. In the preferred embodiment, 0.25 weight percent (based on the weight of the polymer) acetic acid is added to the deionized water to obtain this pH. It is contemplated that other acids such as sulfuric or nitric can be used. Importantly, in the preferred embodiment for PPS the acidic solution is at a temperature of about 350°F (176.7°C). During the second hot washing step, deionized water, to which no acid has been added but heated to a temperature of about 350°F (176.7°C), is used to wash the solidified polymer granules. Typically the hot water (as well as the cold water used during the cold water washing) will have a pH greater than about 5.5 but less than 7.0. Other temperatures may be suitable (e.g., good ion extraction has occurred at a temperature of about 455°F (235°C); lower temperatures may also be suitable).

After being washed, the wet polymer is conventionally dried, such as by a hot air purge during which the solid polymer is dried in a conventional manner at a temperature within the range from about 250°F (121.1°C) to about 310°F (154.4°C).

At this point in the process, an improved polymer meeting the criteria of the present invention is provided.

Polymer and Article of Manufacture

In general, the improved polymer of the present invention is that clean, high molecular weight, linear PAS composition of matter which results from the method of the present invention. Specifically for the preferred embodiments described hereinabove, the polymer is that which results from the polymerization, recovery and washing phases. The polymerization phase of the method of the present invention is effective for producing the desired high molecular weight linear PAS. The quench recovery including the NMP quench is preferred because the polymer produced through a method including that phase has a greater unnotched impact strength than polymer produced through the corresponding water quench or flash recovery. The two-step hot wash produces a sharp decrease in ash content, it increases the flow rate or melt flow (increases of about 50% to about 70% have been noted) and, for the crystalline or semicrystalline polyarylene sulfides, it increases the melt crystallization temperature by up to about 50°C. If air curing is used, it has an effect on toughness in that it tends to increase unnotched impact strength and tensile elongation. The foregoing results in a polymer having a combination of low ash content, higher melt flow, good toughness, and for crystalline or semi-crystalline poly(arylene sulfide)s higher melt crystallization temperature, not heretofore available. In a preferred embodiment, the polymer is PPS having a melt flow within the range of about 5 to about 800 grams per 10 minutes and more preferably in the range of 50 to about 200 grams per 10 minutes and an ash content of not greater than about 0.1 weight percent and a melt crystallization temperature of not less than about 347°F (175°C) and more preferably not less than about 428°F (220°C). It also has a toughness wherein its elongation property is increased to about 5-10 percent and its stress-strain area is greater than about 550 pounds per square inch (psi). As to the ash content characteristic it is believed that such polymers can contain two broad types of ash. It is believed that most of the less adverse ash is removed by the time the ash content has been reduced to about 0.3 weight percent. The type referred to here in describing the purity or cleanliness of the preferred embodiment PPS is believed to be mainly the type that significantly affects key properties, whereas it is believed that the other (if existent) does not or does so to a lesser degree.

With such an improved polymer, an improved article of manufacture can be made. In the preferred embodiment the article of manufacture of the present invention comprises a thermoplastic composite body including a fiber strand in a clean, high molecular weight, linear PAS matrix. One technique of making such a composite is disclosed in U.S. Patent 4,680,224 to O'Connor, which patent is incorporated herein by reference.

More specifically, a preferred embodiment article of manufacture of the present invention comprises at least one reinforcing fiber impregnated with a thermoplastic polymer including the preferred PPS having the specific characteristics described hereinabove. The use of this improved polymer in such a composite produces the unexpected result of improved transverse properties of the resultant composite. That is, the use of the toughened polymer improves transverse composite strengths to a degree which is not obvious because the fundamental neat resin (polymer) strength remains basically unchanged. Although the reasons for this unexpected result are not fully understood or known for sure, the following expresses our current understanding or beliefs.

The characteristic of cleanliness or high purity (i.e., ash content less than about 0.3, or more preferably less than about 0.1 weight percent in the preferred embodiment PPS) of the polymer feedstock used in producing a long-fiber reinforced PAS composite is believed to improve adhesion between the polymer matrix and the reinforcing fibers, and also improves transverse composite properties, mitigate microcracking, and translate into improved composite interlaminar properties. The high-purity PAS, resulting at least in part by the washing phase of the preferred embodiment method of the present invention, shows greatly improved matrix/fiber adhesion [via scanning electron microscopy (SEM) and improved transverse tensile properties] in long-fiber reinforced composite materials. The high purity resulting from the reduction in ash corresponds to a substantial reduction in metallic ion content (principally sodium) which is associated with an increase in the polymer flow rate. These associated changes are believed to lead to better fiber wetout and improved polymer affinity for adhering to the fiber surface. The strong increase in fiber/matrix adhesion (by SEM and transverse tensile data) is unexpected. In addition to the increased flow rate (and chain mobility) likely assisting in the better adhesion, the removal of detrimental ionic species and changes in composite morphology for a semicrystalline PAS are also believed to play a role in the improvement.

For crystalline or semi-crystalline poly(arylene sulfide)s, the improved polymer of the present invention also has a high melt crystallization temperature and an apparently greatly enhanced nucleation density which is believed to result in the faster crystallization during processing. This characteristic is unexpectedly apparently associated with improved fiber/matrix adhesion, improved transverse composite properties, mitigated microcracking and improved interlaminar properties. The apparently enhanced nucleation density (i.e., increase in the number of nucleation sites) is believed to result in the observed much denser spherulitic grain structure and improved composite properties. This appears to also promote adhesion to fiber surfaces and enhanced composite properties. The use of a fast crystallizing resin ($T_{mc}$ greater than about 175°C and more preferably 220°C) permits improved composite processing behavior. This fast crystallizing polymer greatly improves (widens) the range of acceptable processing parameters during which the composite is made, thereby allowing consistent composite properties to be obtained over a wide range of processing conditions. The widening of the processing window allows several molding procedures, such as press-molded (slow and fast cooled) and autoclave, to give similar composite properties. Molding conditions having cooling rates less than 7°F per second result in similar composite crystallinity levels.

The improved polymer of the preferred embodiment of the present invention is preferably PPS having a flow rate of between about 50 and about 200 grams per 10 minutes while also having good toughness so that it is particularly suitable for making composites. The use of this relatively low viscosity feedstock is believed to improve prepreg/molding consolidation and wetout of the fiber surfaces, thereby promoting adhesion and low void content. These changes are believed to lead to the observed improved fiber/matrix adhesion, improved transverse composite properties, mitigation of microcracking and improved interlaminar properties. The melt flow is improved in correspondence with the reduced ash, wherein removing the ionic species approximately doubles the flow rate without significantly degrading the polymer mechanical properties. Polymers having a flow rate of 50 are then improved to approximately 100, while maintaining neat polymer mechanical properties such as strength, toughness and elongation.

The toughness characteristic of the improved polymer of the present invention is believed to also improve transverse composite properties, mitigate microcracking, and translate into improved composite interlaminar properties. This characteristic of the polymer is achieved using the long-cycle (i.e., two heating cycle) polymerization process and a linear polymer that is quenched via an NMP or water process. The quench process removes low molecular weight species and improves the overall polymer toughness/elongation. The toughness can also be improved using an optional air curing phase. Air curing toughens (i.e., improves Izod impact and neat resin elongation) the polymer via polymeric chain extension and crosslinking.

The following is a tabulation of various observed or contemplated characteristics of improved thermoplastic composites of the present invention:

1. Significant reduction of microcracks in products made of the improved PAS in general and in composites made of the improved PAS and fabric or mat type fiber reinforcements of carbon, glass, Kevlar, etc., more particularly. A particularly preferred embodiment employs carbon fiber strands which have been sold under the designation AS-4 by Hercules, Inc. and under the designation T-300 by Amoco, Inc. More specifically, the following observations pertain to at least the reduction of through-the-ply microcracks in cross-ply laminate made from PPS/unidirectional (UD) carbon fiber prepreg:

a. Improving PPS/UD carbon fiber transverse properties above 5.5 thousand pounds per square inch (ksi) mitigates inner-ply microcracking in cross-ply layups.

b. Using a layer of Kapton film between laminate and mold greatly mitigates outer-ply microcracking for PPS/carbon fiber composite materials with a transverse strength greater than 5.5 and less than 7.0 ksi.

c. Further improving PPS/UD carbon fiber transverse properties above 7.0 ksi eliminates through-the-ply cracking in the outer plies when using either aluminum or Kapton release material.

d. The material strengths required to substantially eliminate through-the-ply cracking are consistent with calculated residual thermal stresses the material must endure during the molding process.

e. Improved PPS/UD carbon fiber cross-ply composites have been produced with transverse tensile strengths of 7-12 ksi with essentially no through-the-ply microcracks.

2. Improved PAS composite materials with improved transverse properties. For example, improved PPS/unidirectional carbon fiber composite materials have been produced with transverse properties increasing from 4-5 ksi to 9-12 ksi. The major elements of this example include:

a. PPS resins having good matrix/fiber adhesion

--high-purity PPS polymer (<0.1% ash) apparently leads to greatly enhanced polymer adhesion to the carbon fiber surfaces which is considered to be responsible for the improved transverse material properties;

--high-purity polymers produced via water or NMP quench and further purified using an acid wash process;

--enhancing the polymer purity also apparently increases the melt crystallization temperature, Tmc, which apparently further enhances adhesion to the carbon fiber;

--linear PPS polymers lead to enhanced polymer adhesion to carbon fiber surfaces when compared to branched systems;

b. higher PPS resin toughness

--improved PPS toughness translates into improved interlaminar composite properties;

--improved toughness achieved in PPS using a linear polymer that is water or NMP quenched; further improvement in toughness can be achieved via air-curing the quenched resin;

c. better PPS resin ductility (high elongation)

--PPS resin elongations of 3% correspond to transverse composite elongations 0.4-0.5% and strengths of 4-5 ksi; improving the resin elongation to 5-10% is associated with transverse composite elongations of up to 1% and corresponding strengths of 9-12 ksi;

--improved resin ductility apparently mitigates micro-crack initiation and propagation as noted in cross-ply composites samples;

--improved elongation achieved in PPS using a linear polymer that is water or NMP quenched; further improvement in elongation can be achieved via air-curing the quenched resin;

d. lower PPS resin viscosity

--PPS resins having a melt flow of greater than 50 grams/10 minutes and lower resin viscosities, apparently produce better wetout and uniform resin distribution, leading to enhanced composite properties;

--lower PPS resin viscosity improves molding behavior and mitigates voids and resultant mechanical property reduction;

e. PPS resins having a higher-melt crystallization temperature crystallize rapidly and produce a finer spherulite structure in the composite

--finer spherulite structure apparently produces higher transverse strength composite materials.

3. PPS resins having a high melt crystallization temperature result in an as-molded part with a high (greater than 40%) crystallinity. The processing window for this composite is large, the desired crystallinity achieved in a wide variety of processing conditions without annealing the final part.

The following examples further illustrate the method, composition of material and article of manufacture of the present invention.

## Example 1

## Conventional Flash Recovery, Water Wash

An aqueous solution of sodium sulfide was made in a steam-jacketed, stirred reactor by mixing 76.0 pounds of 47.09 weight percent sodium hydroxide solution and 88.3 pounds of a solution containing 58.80 weight percent sodium hydrosulfide and 0.15 weight percent sodium hydroxide. This solution was heated to about 240° F before transferring to a second stirred reactor fitted with a distillation column. This reactor contained 18.7 gallons NMP and 23 pounds sodium acetate and had been deaerated by three sequential vents to 0 psig following pressurization to 150 psig with nitrogen. The transfer of aqueous sodium sulfide solution was followed by a flush of the steam-jacketed reactor and transfer line with 18.0 gallons of NMP. The resulting mixture was then heated to 304° F under about 4 psig pressure over a period of 43 minutes, at which time column reflux had been established and water take off from the top of the column was started. Water removal, dehydration, was stopped after 108 minutes when the reactor temperature had reached 392° F.

Molten DCB in the amount of 136.1 pounds was pressured into the reactor within about 10 minutes after closing off the distillation column. The entire mixture was first heated to 448°F and held at this temperature for 2 hours before increasing the temperature to 506°F over an interval of 21 minutes for a second hold time of 1.5 hours. This second hold period included 0.5 hour when the reactor was pressurized from 179 to 191 psig with carbon dioxide.

The polymerization mixture was concentrated by slow venting of pressure from 191 to 70 psig at 508°F during a time interval of 62 minutes. After completion of the vent, 5 pounds of water were added and concentrated slurry was further heated to 540°F resulting in a pressure of about 100 psig and flashed into a blender heated to 460°F for 59 minutes. The dried, salt-filled PPS was first washed with 120 gallons of city water at ambient temperature and then followed by a wash with 80 gallons of city water at 350°F with a 180°F deionized water rinse on the filter. The filter cake was then dried at 200-300°F under atmospheric pressure for about 3 hours.

Example 2

Conventional Flash Recovery, Acid Wash

Polymer was prepared as indicated in Example 1. About 86 pounds of this was put back into the hot wash stirred tank with 80 gallons of deionized water containing 100 ml of glacial acetic acid. The wash slurry was heated to about 210°F with vent valve open so that air could escape as the water boiled, and then the vent valve was closed and heating continued to 350°F and held at this temperature for 30 minutes before cooling. When the PPS slurry reached 120°F, it was filtered using 180°F deionized water rinse on the filter cake.

The wet filter cake was taken back for a second hot wash with deionized water using the same wash procedure and filtration. The filter cake was dried at 200-300°F for 3 hours at atmospheric pressure.

Example 3

NMP Quench Recovery, Acid Wash

An aqueous solution of sodium sulfide was made in a steam-jacketed, stirred reactor by mixing 72.6 pounds of 49.52% sodium hydroxide solution and 88.1 pounds of a solution containing 58.85 weight percent sodium hydrosulfide and 0.14 weight percent sodium hydroxide. This solution was heated to about 240°F before transferring to a second stirred reactor fitted with a distillation column. This reactor contained 18.7 gallons NMP and 23 pounds sodium acetate and had been deaerated by three sequential vents to 0 psig following pressurization to 150 psig with nitrogen. The transfer of aqueous sodium sulfide solution was followed by a flush of the steam-jacketed reactor and transfer line with 18.0 gallons of NMP. The resulting mixture was then heated to 310°F under about 4 psig pressure, at which time column reflux had been established and water take off from the top of the column was started. Water removal, dehydration, was stopped after 91 minutes when the reactor temperature had reached 405°F.

Molten DCB in the amount of 135.4 pounds was pressured into the reactor within about 10 minutes after closing off the distillation column. The entire mixture was first heated to 440°F and held at this temperature for 4 hours. At this point, 3 pounds of water were pressured into the reactor. The reaction mixture was then heated to 508°F and held there for 3 hours. Following this, the reaction mixture was cooled to 400°F at which point 20 gallons of NMP were added. Cooling was continued to about 220°F at which point the polymer product was transferred to a slurry tank. The previous vessel and lines were then flushed with 40 gallons of NMP into the slurry tank at 194°F. The polymer was then recovered in a manner similar to that described in Example 1.

About 85 pounds of polymer prepared as indicated above were put into a hot wash stirred tank with 80 gallons of deionized water containing 100 ml of glacial acetic acid. The wash slurry was heated to about 210° F with vent valve open so that air could escape as the water boiled, and then the vent valve was closed and heating continued to 350° F and held at this temperature for 30 minutes before cooling. When the PPS slurry reached 120° F, it was filtered using 180° F deionized water rinse on the filter cake.

The wet filter cake was taken back for a second hot wash with deionized water using the same wash procedure and filtration. The filter cake was dried at 200-300° F for 3 hours at atmospheric pressure.

Example 4

Water Quench Recovery, Water Wash

An aqueous solution of sodium sulfide was made in a steam-jacketed, stirred reactor by mixing 71.6 pounds of 48.9 weight percent sodium hydroxide solution and 88.1 pounds of a solution containing 58.9 weight percent sodium hydrosulfide and 0.14 weight percent sodium hydroxide. This solution was heated to about 240° F before transferring to a second stirred reactor fitted with a distillation column. This reactor contained 18.7 gallons NMP and 23 pounds sodium acetate and had been deaerated by three sequential vents to 0 psig following pressurization to 150 psig with nitrogen. The transfer of aqueous sodium sulfide solution was followed by a flush of the steam-jacketed reactor and transfer line with 18.0 gallons of NMP. The resulting mixture was then heated to 310° F under about 6 psig pressure over a period of 43 minutes, at which time column reflux had been established and water take off from the top of the column was started. Water removal, dehydration, was stopped after 79 minutes when the reactor temperature had reached 410° F.

Molten DCB in the amount of 136.4 pounds was pressured into the reactor within about 10 minutes after closing off the distillation column. The entire mixture was first heated to 440° F and held at this temperature for 4 hours before increasing the temperature to 509° F for a second hold time of 3 hours. Following this, the reaction mixture was cooled to 300° F at which point 10 gallons of water were added, dropping the temperature to 251° F. This mixture was then transferred from the reaction vessel, followed by a 60 gallon water rinse of the reaction vessel and transfer lines. Washing and drying was as indicated in Example 1.

Example 5

Water Quench Recovery, Acid Wash

Polymer was prepared as indicated in Example 4. About 85 pounds of this were put into a hot wash stirred tank with 80 gallons of deionized water containing 100 ml of glacial acetic acid. The wash slurry was heated to about 210° F with vent valve open so that air could escape as the water boiled, and then the vent valve was closed and heating continued to 350° F and held at this temperature for 30 minutes before cooling. When the PPS slurry reached 120° F, it was filtered using 180° F deionized water rinse on the filter cake.

The wet filter cake was taken back for a second hot wash with deionized water using the same wash procedure and filtration. The filter cake was dried at 200-300° F for 3 hours at atmospheric pressure.

Example 6

Non-Vent Flash Recovery, Acid Wash

An aqueous solution of sodium sulfide was made in a steam-jacketed, stirred reactor by mixing 76.0

10

pounds of 47.09 weight percent sodium hydroxide solution and 88.2 pounds of a solution containing 58.80 weight percent sodium hydrosulfide and 0.15 weight percent sodium hydroxide. This solution was heated to about 240° F before transferring to a second stirred reactor fitted with a distillation column. This reactor contained 18.7 gallons NMP and 23 pounds sodium acetate and had been deaerated by three sequential vents to 0 psig following pressurization to 150 psig with nitrogen. The transfer of aqueous sodium sulfide solution was followed by a flush of the steam-jacketed reactor and transfer line with 18.0 gallons of NMP. The resulting mixture was then heated to 289° F under about 4 psig pressure over a period of 82 minutes, at which time column reflux had been established and water take off from the top of the column was started. Water removal, dehydration, was stopped after 103 minutes when the reactor temperature had reached 399° F.

Molten DCB in the amount of 134.9 pounds was pressured into the reactor within about 10 minutes after closing off the distillation column. The entire mixture was first heated to 440° F and held at this temperature for 4 hours before increasing the temperature to 510° F over an interval of 27 minutes for a second hold time of 2 hours. Water, in the amount of 3.5 pounds was added to the reactor one hour after reaching the 440° F hold temperature. After the hold at 510° F, the temperature was increased to 540° F within 20 minutes to start the flash recovery. The pressure at the beginning of the flash was 261 psig. At this point, the reaction mixture was flashed into a ribbon blender heated to 460° F at 0.02 psig while being purged with nitrogen. Flash was complete in 96 minutes and the salt filled PPS was dried for another two hours at 460° F. After cooling, the salt filled PPS was washed one time in 120 gallons of deionized water at ambient temperature and one time in 80 gallons of deionized water in a steam jacketed pressure wash tank at 350° F and 150 psig. The filter cake was then dried at 200-300° F and atmospheric pressure for about 3 hours.

About 84 pounds of the polymer prepared as indicated above were rewet and given another hot wash in 80 gallons of deionized water containing 100 ml of glacial acetic acid. The wash slurry was deaerated through a vent valve during heat up to about 210° F, followed by further heating with the valve closed to about 350° F. After 30 minutes at 350° F, the slurry was cooled to 91° F and filtered using a 180° F deionized water rinse of the filter cake. The wet PPS cake was then given a cold wash in deionized water at ambient temperature. The wet filter cake was dried in the usual manner at 200-300° F for about 3 hours at atmospheric pressure.

Example 7

NMP Quench, Acid Wash, Air Cure

Polymer was prepared as indicated in Example 3. The material was transferred to a cure vessel where it was heated, in air, with agitation, at a temperature of about 350° F for about 6 hours.

Example 8

Determination of Properties of Resins and Composites Made from Resins

Resins made by the techniques described in the preceeding examples were subjected to flow rate, ash and melt crystallization temperature determinations using the procedures noted in Table I, which also lists the results of these tests. The neat resins were also converted into standard ASTM test specimens using methods known to those skilled in the art and subjected to tensile modulus, tensile strength, elongation and unnotched Izod impact testing, with results presented in Table I.

Neat resins were converted into unidirectional carbon fiber reinforced composite materials using techniques such as those detailed in U.S. Patent 4,640,224. These were converted into standard ASTM test specimens and subjected to transverse tensile strength determinations. Results are presented in Table I.

11

TABLE I

| Example Number | Polymer Type | Resin | | | | | | | Composite | |
|---|---|---|---|---|---|---|---|---|---|---|
| | | Flow Rate, g/10 min. | Ash, % | $T_{mc}$, °C | Tensile Modulus, msi | Tensile Strength ksi | Elongation % | Impact Strength ft-lb/in | Transverse Tensile Strength ksi | Microcracks |
| 1 | Conventional Flash, Water Wash | 154 | .48 | 203 | .52 | 10.6 | 2.3 | 5.6 | 3.8 | Many |
| 2 | Conventional Flash, Acid Wash | 258 | .32 | 213 | .51 | 8.9 | 1.9 | 4.2 | 6.2 | Few |
| 3 | NMP Quench, Acid Wash | 122 | .01 | 232 | .50 | 13.1 | 5.6 | 17.5 | 9.5 | Zero |
| 4 | Water Quench, Water Wash | 57 | .32 | 212 | .51 | 13.0 | 5.4 | 20.1 | 4.2 | Many |
| 5 | Water Quench, Acid Wash | 95 | .12 | 223 | .53 | 12.9 | 7.9 | 16.2 | 6.0 | Few |
| 6 | Non-Vent Flash, Acid Wash | 190 | .18 | 219 | .51 | 8.4 | 1.8 | 3.5 | 6.3 | Zero |
| 7 | NMP Quench, Acid Wash, Air Cure | 59 | ---- -** | 232 | .51 | 12.5 | 5.6 | 18.2 | 7.1 | Zero |

*Resin and UD Carbon Fiber Composite Properties#*

# See description of test methods provided hereinbelow.
** A dash indicates that test wasnot run on that sample.

It is noted that while some of the following test methods are applicable as described to any of the poly-(arylene sulfide)s of this invention, some, such as flow rate, differ somewhat depending upon which specific poly(arylene sulfide) is being tested. The descriptions below of the test methods are specific for poly-(phenylene sulfide).

Flow Rate - ASTM D1238, procedure B, condition 315/5.0.

Ash - A weighed portion of polymer is burned in a platinum dish. Residual carbonaceous material is removed by heating at 1000°F in a muffle furnace. The weight of the residue (ash) is expressed as a percentage of the original weight of the polymer.

$T_{mc}$ - A Perkin-Elmer DSC-2 instrument was used. Sample was heated to 320°C, held there 5 minutes and cooled at the rate of 20°C/min. with $T_{mc}$ determined by scanning during the cooling phase.

Tensile Strength and Modulus, Elongation and Transverse Tensile Strength -

ASTM D638; transverse tensile strength was measured at right angle to fiber direction for the composite specimens.

Izod Impact Strength, Unnotched - ASTM D256.

Microcracks - Optical Microscopy.

Thus, the present invention is well adapted to carry out the objects and attain the ends and advantages mentioned above as well as those inherent therein. While preferred embodiments of the invention have been described for the purpose of this disclosure, changes can be made by those skilled in the art, which changes are encompassed within the spirit of this invention as defined by the appended claims.

## Claims

1. A method of producing clean, high molecular weight, linear poly(arylene sulfide), comprising the steps of:
(a) creating high molecular weight linear poly(arylene sulfide) by heating a reaction mixture including linear poly(arylene sulfide) during two sequential heating cycles;
(b) recovering from the reaction mixture high molecular weight linear poly(arylene sulfide) in solidified form; and
(c) washing the recovered solidified high molecular weight linear poly(arylene sulfide) to remove ash therefrom.

2. A method as defined in claim 1, wherein said step (a) includes:
heating the reaction mixture in a low temperature cycle; and
after the preceding step, heating the reaction mixture in a higher temperature cycle.

3. A method as defined in claim 1, wherein the two sequential heating cycles include:
a first heating cycle, wherein the reaction mixture is heated to a temperature within the range from about 400°F to about 460°F for a time period within the range from about 1 hour to about 6 hours; and
a second heating cycle, wherein the reaction mixture is heated to a temperature within the range from about 500°F to about 520°F for a time period within the range from about 1 hour to about 4 hours.

4. A method as defined in claim 1, wherein said step (a) includes:
heating the reaction mixture at about 440°F for about 4 hours; and
thereafter heating the reaction mixture at about 510°F for about 3 hours.

5. A method as defined in claim 1, wherein said step (b) includes:
solidifying linear poly(arylene sulfide) in the reaction mixture to produce a solid-in-liquid mixture; and
adding water to the solid-in-liquid mixture to dilute the liquid phase thereof.

6. A method as defined in claim 1, wherein said step (b) includes:
solidifying linear poly(arylene sulfide) oligomers and polymers in the reaction mixture; and
adding N-methyl-2-pyrrolidone to the reaction mixture resulting from the preceding step for dissolving solidified poly(arylene sulfide) oligomers.

7. A method as defined in claim 1, wherein said step (b) includes flash recovering high molecular weight linear poly(arylene sulfide).

8. A method as defined in claim 1, wherein said step (c) includes:
treating the recovered solidified high molecular weight linear poly(arylene sulfide) with a hot acidic aqueous solution; and
thereafter treating the recovered solidified high molecular weight linear poly(arylene sulfide) with hot water.

9. As a composition of matter, poly(arylene sulfide) prepared in accordance with the method of claim 1.

10. A method of producing clean, high molecular weight, linear poly(arylene sulfide), comprising the steps of:

13

EP 0 418 455 A2

(a) sequentially solidifying high molecular weight then low molecular weight linear poly(arylene sulfide) in a reaction mixture including high molecular weight and low molecular weight linear poly(arylene sulfide) by controlled cooling;

(b) redissolving low molecular weight linear poly(arylene sulfide);

(c) filtering solidified high molecular weight linear poly(arylene sulfide) from the reaction mixture; and

(d) washing the filtered solidified high molecular weight linear poly(arylene sulfide) to remove ash therefrom.

11. A method as defined in claim 10, wherein said step (b) includes adding to the solution of said step (a) N-methyl-2-pyrrolidone in an amount within the range from about 3.0 moles to about 5.0 moles per mole of sulfur present.

12. A method as defined in claim 10, wherein said step (d) includes:

treating the filtered solidified high molecular weight linear poly(arylene sulfide) with a hot acidic aqueous solution; and

thereafter treating the filtered solidified high molecular weight linear poly(arylene sulfide) with hot water.

13. As a composition of matter, poly(arylene sulfide) prepared in accordance with the method of claim 10.

14. A method of producing clean, high molecular weight, linear poly(arylene sulfide), comprising the steps of:

(a) recovering, from a reaction mixture including high molecular weight linear poly(arylene sulfide), high molecular weight linear poly(arylene sulfide) in solidified form; and

(b) washing the recovered solidified high molecular weight linear poly(arylene sulfide) to remove ash therefrom, including:

washing the recovered solidified high molecular weight linear poly(arylene sulfide) with a hot acidic solution; and

washing the recovered solidified high molecular weight linear poly(arylene sulfide) with hot water.

15. A method as defined in claim 14, wherein the hot acidic solution is at a temperature of about 350° F.

16. A method as defined in claim 15, wherein the hot acidic solution includes deionized water and about 0.25 weight percent acetic acid.

17. A method as defined in claim 15, wherein the hot acidic solution has a pH of about 5.5.

18. A method as defined in claim 15, wherein the hot water is deionized water at a temperature of about 350° F.

19. A method as defined in claim 14, wherein the hot acidic solution has a pH sufficient to extract sodium cations from the solidified high molecular weight linear poly(arylene sulfide).

20. A method as defined in claim 14, wherein said step (a) includes:

solidifying linear poly(arylene sulfide) in the reaction mixture to produce a solid-in-liquid mixture; and

adding water to the solid-in-liquid mixture to dilute the liquid phase thereof.

21. A method as defined in claim 14, wherein said step (a) includes:

solidifying linear poly(arylene sulfide) oligomers and polymers in the reaction mixture; and

adding N-methyl-2-pyrrolidone to the reaction mixture resulting from the preceding step for dissolving solidified poly(arylene sulfide) oligomers.

22. A method as defined in claim 14, wherein said step (a) includes flash recovering high molecular weight linear poly(arylene sulfide).

23. As a composition of matter poly(arylene sulfide) prepared in accordance with the method of claim 14.

24. A method of producing poly(phenylene sulfide), comprising the steps of:

(a) heating a polymer reaction mixture at a temperature within the range from about 400° F to about 460° F for a time period within the range from about 1 hour to about 6 hours, the reaction mixture including poly(phenylene sulfide), sodium chloride, water and N-methyl-2-pyrrolidone;

(b) after said step (a), heating the reaction mixture at a temperature within the range from about 500° F to about 520° F for a time period within the range from about 1 hour to about 4 hours;

(c) after said step (b), treating the reaction mixture to produce solidified poly(phenylene sulfide) in a liquid phase of the reaction mixture;

(d) after said step (c), adding N-methyl-2-pyrrolidone to the reaction mixture;

(e) separating solidified poly(phenylene sulfide) remaining after said step (d) from the liquid phase of the reaction mixture;

(f) washing the separated solidified poly(phenylene sulfide) with deionized water;

(g) after said step (f), washing the separated solidifed poly(phenylene sulfide) with acidic deionized water heated to about 350° F; and

(h) after said step (g), washing the separated solidified poly(phenylene sulfide) with deionized water heated to about 350° F.

14

EP 0 418 455 A2

25. A method as defined in claim 24, wherein the polymer reaction mixture is heated in said step (a) at a temperature within the range from about 400°F to about 440°F for a time period within the range from about 3 hours to about 4 hours.

26. A method as defined in claim 24, wherein the polymer reaction mixture is heated in said step (a) at a temperature of about 440°F for about 4 hours.

27. A method as defined in claim 24, wherein the reaction mixture is heated in said step (b) at a temperature of about 510°F for about 3 hours.

28. A method as defined in claim 24, wherein the acidic deionized water of said step (g) has a pH of about 5.5.

29. A method as defined in claim 28, wherein the deionized water of said step (f) and the deionized water of said step (h) have a pH greater than 5.5 but less than 7.0.

30. As a composition of matter, poly(phenylene sulfide) prepared in accordance with the method of claim 24.

31. A method of producing poly(phenylene sulfide), comprising the steps of:

(a) heating a polymer reaction mixture at a temperature within the range from about 400°F to about 460°F for a time period within the range from about 1 hour to about 6 hours, the reaction mixture including poly(phenylene sulfide), sodium chloride, water and N-methyl-2-pyrrolidone;

(b) after said step (a), heating the reaction mixture at a temperature within the range from about 500°F to about 520°F for a time period within the range from about 1 hour to about 4 hours;

(c) flash recovering solidified poly(phenylene sulfide) from the reaction mixture, including further heating the reaction mixture after said step (b) without reducing pressure;

(d) washing the recovered solidified poly(phenylene sulfide) with deionized water;

(e) after said step (d), washing the recovered solidifed poly(phenylene sulfide) with acidic deionized water heated to about 350°F; and

(f) after said step (e), washing the recovered solidified poly(phenylene sulfide) with deionized water.

32. A method as defined in claim 31, wherein the polymer reaction mixture is heated in said step (a) at a temperature within the range from about 400°F to about 440°F for a time period within the range from about 3 hours to about 4 hours.

33. A method as defined in claim 31, wherein the polymer reaction mixture is heated in said step (a) at a temperature of about 440°F for about 4 hours.

34. A method as defined in claim 31, wherein the reaction mixture is heated in said step (b) at a temperature of about 510°F for about 3 hours.

35. A method as defined in claim 31, wherein the acidic deionized water of said step (e) has a pH of about 5.5.

36. A method as defined in claim 35, wherein the deionized water of said step (d) and the deionized water of said step (f) have a pH greater than 5.5 but less than 7.0.

37. As a composition of matter, poly(phenylene sulfide) prepared in accordance with the method of claim 31.

38. A method of producing poly(phenylene sulfide), comprising the steps of:

creating a solution by reacting a 50% by weight NaOH aqueous solution with a 60% by weight NaSH aqueous solution and by adding and reacting therewith N-methyl-2-pyrrolidone, sodium acetate and dichlorobenzene to produce a polymerized reaction mixture including poly(phenylene sulfide); and

heating the reaction mixture, recovering solidified poly(phenylene sulfide) from the reaction mixture and washing the recovered solidified poly(phenylene sulfide) so that the washed recovered solidified poly-(phenylene sulfide) has a melt flow within the range of about 50 to about 200 grams per 10 minutes and an ash content of not greater than about 0.1 weight percent and a melt crystallization temperature of not less than about 347°F.

39. A composition of matter comprising substantially linear poly(phenylene sulfide) having a melt flow within the range of about 50 to about 200 grams per 10 minutes and an ash content of not greater than about 0.1 weight percent and a melt crystallization temperature of not less than about 347°F.

40. An article of manufacture, comprising a thermoplastic composite body including a fiber strand in a clean, high molecular weight, linear poly(arylene sulfide) matrix.

41. An article of manufacture, comprising at least one reinforcing fiber impregnated with a thermoplastic polymer including substantially linear poly(phenylene sulfide) having a melt flow within the range of about 50 to about 200 grams per 10 minutes and an ash content of not greater than about 0.1 weight percent and a melt crystallization temperature of not less than about 347°F.

42. A reinforced plastic composite comprising

(a) a roving of reinforcing material having unidirectionally aligned fibers and

(b) a matrix consisting essentially of a substantially linear poly(para-phenylene sulfide) having an ash content of not greater than about 0.3 weight percent.

43. A composite according to claim 42 wherein said roving consists essentially of unidirectionally aligned fibers consisting essentially of carbon.

44. A composite according to claim 43 wherein said matrix consists essentially of a linear poly(para-phenylene sulfide) which has been subjected to washing with a treating agent to reduce the ash content of the poly(para-phenylene sulfide) to a point no greater than about 0.1 weight percent.

45. A composite according to claim 44 wherein said treating agent is aqueous acidic acid.

46. A composite according to claim 42 wherein prior to the formation of said composite said poly(para-phenylene sulfide) has been washed with aqueous acidic acid to reduce the ash content thereof to an extent which improves the transverse tensile of said composite.

47. A composite according to claim 46 wherein said poly(para-phenylene sulfide) is prepared by polymerizing para-dichlorobenzene in two heating cycles wherein the first heating cycle is conducted at a temperature in the range of from about 400°F to about 460°F and the temperature in the second heating cycle is conducted at a temperature in the range of about 500°F to about 520°F.

48. A composite according to claim 47 wherein said poly(para-phenylene sulfide) is recovered by increasing the temperature to a temperature above that of the higher temperature cycle and then flashing the reaction mixture into a vessel at a lower temperature and pressure to obtain solidified polymer.

49. A composite according to claim 47 wherein the poly(para-phenylene sulfide) is recovered by solidifying the linear poly(para-phenylene sulfide) oligomers and polymers in the reaction mixture and then adding N-methyl-2-pyrrolidone to the reaction mixture resulting from the preceding step to dissolve solidified oligomers, filtering the solidified high molecular weight polymer from the resulting mixture, and then washing the filtered solidified high molecular weight polymer to remove ash therefrom.

50. A composite according to claim 46 wherein said matrix consists essentially of substantially linear poly-(para-phenylene sulfide) which has been subjected to air curing sufficient to increase the toughness of the polymer.